# EUROPEAN PATENT SPECIFICATION

(11) **EP 3 941 704 B1**
(45) Date of publication and mention of the grant of the patent: **25.09.2024**
(21) Application number: 20715470.9
(22) Date of filing: 18.03.2020
(51) Int. Cl.: B29B 17/04, B29C 41/00, B29C 41/04, B29B 17/02

(54) **METHOD FOR RECYCLING PLASTIC**
VERFAHREN ZUR WIEDERVERWERTUNG VON KUNSTSTOFF
PROCÉDÉ DE RECYCLAGE DE PLASTIQUE

(30) Priority: 18.03.2019 BE 201905165
(43) Date of publication of application: 26.01.2022
(73) Proprietor: Vanbriel Yuan BVBA, 2000 Antwerpen (BE)
(72) Inventor: VANBRIEL, Joris, 2000 Antwerpen (BE); YUAN, Peng Yu, 2000 Antwerpen (BE)
(74) Representative: Arnold & Siedsma
(86) International application number: PCT/IB2020/052469
(87) International publication number: WO 2020/188498

(56) References cited:
- EP-A2- 1 188 531
- GB-A- 2 311 245
- US-A- 3 525 788
- US-A1- 2005 113 486
- US-A1- 2012 199 675
- US-A1- 2014 231 557

## Description

### Field of the invention

The present invention relates to a method for recycling plastic, preferably recycling plastic toys.

### Background

Depending on their use, plastic products are manufactured from thermoplastics or thermosets. Thermoplastics have the feature that, when exposed to heat, they become liquid. This effect is caused by the fact that thermoplastics are formed by molecular chains which are only bonded to each other by Van der Waals bonds. The Van der Waals bonds are broken when exposed to heat, whereby the individual chains can move along each other. A thermoplastic can thus melt. A thermoplastic can thus be recycled multiple times in simple manner. In the case of thermosets the molecular chains are interconnected. This interconnectedness is referred to as a cross-link. The cross-links are covalent bonds which are many times stronger than the Van der Waals bonds. Because the molecular chains are cross-linked, a thermoset has a strong and rigid structure. When exposed to heat, the molecular chains can however not start to move relative to each other. Hereby, the thermosets retain their shape when exposed to heat. When heated, the covalent cross-links break, and the molecule chains are broken. A thermoset is thus decomposed into multiple lumps of smaller molecules. These molecules produce black, charred remnants and malodorous and combustible gases. This makes thermosets difficult to recycle. As a result, thermosets are often incinerated in an incinerator. Thermosets and thermoplastics are typically used for manufacturing toys. Such toys however have a relatively short lifespan and are difficult or impossible to recycle.

US2005113486 describes process for making a molded article having a granular or speckled appearance, including color compounding a first polymeric material and at least one pigment to form a color compound of the at least one pigment with the first polymeric material; comminuting the color compound; mixing the reduced particle size color compound with a second polymeric material having a color different from or contrasting with the at least one pigment to form a mixture wherein the reduced particle size color compound is distributed in the second polymeric material; and molding the mixture to form a molded article having a granular or speckled appearance, and an article.

EP1188531 describes a system for recycling reusable resin mold products recovered from discarded apparatuses is disclosed. This recycling system includes a crushing system for crushing resin mold products one kind by one kind into crushed resinous pieces and packing the same in a bag, a classification system for irradiating a light beam to the resin in the bag and classifying the bags into respective kinds of resins based on a reflected beam therefrom, a cleaning system for separately cleaning the respective kind of crushed resinous pieces taken out of the bag to remove foreign matters adhered onto the surfaces of the crushed resinous pieces therefrom, and a recovery system for recovering the cleaned crushed resinous pieces.

US2014231557 describes a process for the recovery of a plastic product from ASR or ESR mixtures can include five or more process steps selected from DEXRT; XRF; size reduction; density separation; NIR sorting; Electrostatic separation; LD sorting; Wood removal; rubber removal; metal removal; and glass removal.

GB2311245 describes a process in which the cellular interior is formed by the use of a comparatively large granular plastics material containing a blowing agent and a further process in which the fine powder material and granular material containing a blowing agent are charged together to the mould and after rotation at a first temperature to form the skin, mould and its contents are further heated to a second temperature at which the granular material is expanded to form the cellular interior.

### Summary of the invention

Embodiments of the invention have the object of providing a method in order to obtain an improved recycling of plastic, preferably an improved recycling of plastic toys.

The invention provides for this purpose a method for recycling plastic according to any one of the appended claims..

### Brief description of the figures

The above and other advantageous features and objectives of the invention will become more apparent and the invention better understood with reference to the following detailed description when read in combination with the accompanying figures, in which:
Figure 1 is a schematic overview of an embodiment of a method for recycling plastic, preferably recycling plastic toys, according to the invention;
Figure 2 is an alternative embodiment of figure 1;
Figure 3 is a schematic overview of an embodiment of the sorting of the plastic pieces based on type of plastic;
Figure 4 is a schematic overview of an embodiment of the sorting of the plastic pieces based on colour;
Figure 5 is a schematic overview of a preferred embodiment of a method for recycling plastic, preferably recycling plastic toys, according to the invention;
Figure 6 is a schematic view of plastic pieces with a maximum section;
Figure 7 is a schematic view of plastic flakes with a maximum section; and
Figure 8 is a schematic view of an embodiment of a recycling system for recycling plastic, preferably recycling plastic toys, according to the invention.

### Detailed embodiments

The invention will now be further described with reference to exemplary embodiments shown in the figures. The same or similar elements are designated in the figures with the same reference numeral.

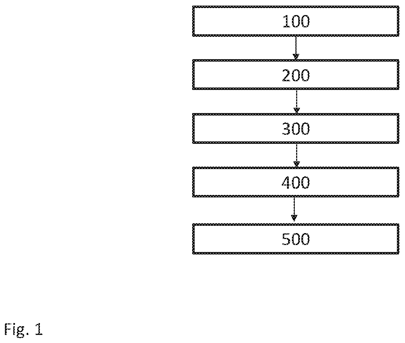

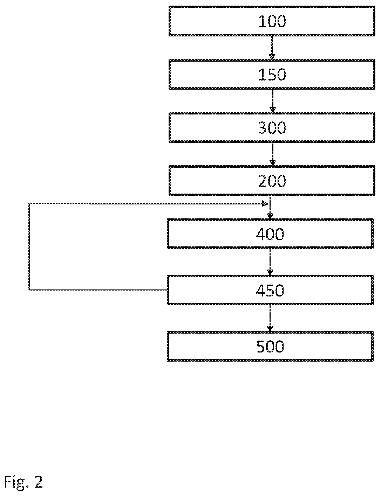

Figures 1 and 2 illustrate an embodiment of a method for recycling plastic according to the invention. Figure 1 shows particularly a flowchart of the method, wherein the method comprises the following steps:
- step 100 of grinding the plastic into plastic pieces 600;
- step 200 of sorting the plastic pieces based on type of plastic;
- step 300 of sorting the plastic pieces based on colour;
- after sorting of the plastic pieces, the step 400 of shredding the sorted plastic pieces into plastic flakes 700;
- step 500 of processing the plastic flakes into a recycled good by means of rotational moulding, wherein a micronized plastic is added during the rotational moulding.

According to an embodiment of the method for recycling plastic, the step 100 comprises of grinding the plastic into plastic pieces 600. In a preferred embodiment the plastic is plastic toys. It will be apparent to the skilled person that the grinding of the plastic can be performed by means of different types of grinding device, use can for instance be made of a horizontal or vertical hammer mill and so on. Step 100 is particularly performed by a grinding device wherein the plastic is ground into plastic pieces 600 with a desired minimum size. The minimum size of plastic pieces 600 corresponds to a maximum section D2 of the plastic pieces 600, such that this is preferably greater than 50 mm, preferably greater than 75 mm, more preferably greater than 100 mm. An advantage hereof his based on the insight that plastic, and particularly plastic toys, often comprise components which are made from different colours. The plastic components, which are coupled or attached to each other, can be detached from each other in simple manner by the grinding. A further advantage is that because the plastic pieces comprise a determined minimum size, the step 300 of sorting the plastic pieces by colour can thus take place rapidly and thoroughly.

Step 200 of the method comprises of sorting the plastic pieces 600 based on type of plastic. It will be apparent to the skilled person that the sorting of the plastic pieces 600 based on type can be carried out by means of different techniques. The plastic pieces can thus for instance be sorted based on density in order to thus obtain the desired material type of plastic. According to a preferred embodiment of the method, the plastic pieces are sorted by means of an optical Near-Infrared, NIR, sorting device.

Step 300 of the method comprises of sorting the plastic pieces 600 based on colour of the plastic pieces. According to a preferred embodiment, the step 300 is performed by an optical sorting device. The colour of the plastic pieces is preferably determined by means of spectral imaging. Spectral imaging is imaging which makes use of one or more wavelength bands in the electromagnetic spectrum. A normal camera typically captures light across three wavelength bands in the visible spectrum, red, green and blue, RGB. Spectral imaging comprises a wide variety of techniques that go beyond RGB. Spectral imaging can map the infrared spectrum, the visible spectrum, the ultraviolet spectrum, x-rays or a combination of the above spectra. The spectral imaging preferably comprises multispectral and/or hyperspectral imaging. An advantage of multispectral and/or hyperspectral imaging is that image data can be collected in visible and non-visible wavelength bands simultaneously. A further advantage is that use can be made of illumination from outside the visible range, or of optical filters for capturing a specific spectral range. Multispectral imaging typically relates to the capturing of at least three wavelength bands to about ten wavelength bands. Hyperspectral imaging typically relates to the capturing of hundreds of wavelength bands. A resolution of each wavelength band, and a width thereof, can be adjusted depending on the application. The spectral imaging is preferably Near-Infrared, NIR, spectroscopy. NIR spectroscopy makes use of infrared, IR, radiation. This IR radiation is directed at the plastic piece to be examined. The plastic piece lets through a part of this radiation, absorbs a part, and can reflect this radiation. From this, a spectrum is created which shows which wavelengths were absorbed or conversely let through. The materials and/or colours in question can then be determined based on this spectrum, since each molecule will absorb this radiation in a different way. NIR spectroscopy provides the advantage that it can be used both for sorting by type of plastic of the plastic pieces and for sorting by colour of the plastic pieces. A further advantage of NIR spectroscopy is that the colour can be determined rapidly and accurately in advantageous manner.

Step 400 of the method comprises, after sorting of the plastic pieces, of shredding the sorted plastic piece into plastic flakes. The step 400 of shredding must be performed after steps 200 and 300. The shredding can be performed by different shredding devices. The shredding device can be similar to the grinding device of step 100. Alternatively, the shredding device can differ from the grinding device of step 100 in that the plastic pieces are shredded into plastic flakes, wherein the plastic flakes have dimensions with a maximum section D1. The maximum section D1 is preferably smaller than 20 mm, more preferably smaller than 12 mm, still more preferably smaller than 10 mm, most preferably smaller than 8 mm. In an embodiment the size of the plastic flakes can be verified 450 by means of a screen (shown in figure 2). The screen can for instance be a trommel screen or a vibrating screen, wherein the screen has a passage size or screen size which corresponds to the maximum section D1 of the plastic flakes.

Step 500 of the method comprises of processing plastic flakes into a recycled good by means of rotational moulding, wherein a micronized plastic is added during the rotational moulding. In a first processing step the flakes are placed in a mould of a rotational moulding device. Depending on the object of the recycled good, a desired quantity of micronized plastic is added. By rotating the rotational moulding device the plastic flakes will mix with the micronized plastic. The mould is rotated in an oven or, in an alternative embodiment, can also comprise heating elements itself. When the mould is heated, the micronized plastic will melt and form the bond between the plastic flakes. The mould rotates along two mutually perpendicular axes, whereby the melted material is pressed against the mould wall and takes on the shape of the mould. A recycled good is thus obtained. Research has shown that in some cases the use of plastic flakes results in recycled goods with poor structural properties. Because the molecules cannot move relative to each other, bonds can no longer be created during recycling of the plastic. Owing to the rotational moulding, the wall thickness of the recycled good can be determined and the melted micronized plastic will surround the plastic flakes during the rotational moulding, whereby an improved structural integrity of the recycled good is obtained.

Figure 2 shows a similar flowchart of a method shown in figure 1 according to the invention. The method is similar to the method shown in figure 1. Figure 1 shows particularly that the steps of grinding 100, sorting by type 200 and sorting by colour 300 are successive. It will however be apparent that the steps 200 and 300, as shown in figure 2, are interchangeable in an alternative embodiment. Figure 2 further shows that step 300 and step 200 can be preceded by the step 150 of washing the plastic. Plastic, and particularly plastic toys, can be contaminated by attached contaminants such as sand, dust, oil and so on. The further steps of the method can hereby be impeded or hampered. The structural integrity of the recycled good can further also deteriorate. By performing the step of washing before the steps of sorting false positives in the sorting are avoided and the structural integrity of the recycled good is improved.

In an alternative embodiment the size of the plastic flakes can be verified 450 by means of a screen after the step 400 of the shredding into plastic flakes. When the size of a plastic flake or a plurality of plastic flakes does not meet requirements, they can once again undergo the step 400 of shredding so as to ultimately comply with the predetermined size, as described with reference to figure 1.

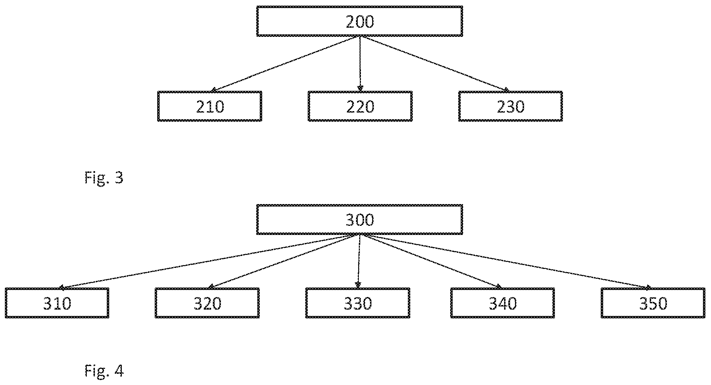

Figure 3 and 4 illustrate an embodiment of a part of the method for recycling plastic according to the invention. The figures particularly show that the sorting of the plastic pieces in step 200 and 300 comprises of subdividing the plastic pieces into groups according to a type 210, 220, 230, and so on and/or a colour 310, 320, 330, 340, 350. Each group has plastic pieces which are substantially of the same type of plastic and/or colour as each other.

Figure 3 illustrates particularly that the step 200 of sorting of the plastic pieces based on type of plastic comprises of subdividing the plastic pieces into groups according to a type 210, 220, 230. The groups comprise plastic pieces of substantially the same type. Plastic can typically be subdivided into three types: thermoplastics, thermosets and elastomers. The group 210 in the method corresponds for instance to the type thermosets, the group 220 to the type thermoplastics and the group 230 to the type elastomers. It will be apparent to the skilled person that, after sorting, the groups are separated from each other. The sorting of plastic according to type is described in the step 300 of figure 1. In an alternative embodiment the sorting by type of plastic can take place by means of float-sink density separation. Float-sink density separation is based on a difference in density between the different types of plastic and a density of a liquid in a separation container. Depending on the density of the plastics, they will float or sink in the liquid. The floating and the sunk plastics can then be removed from the separation container in succession. The plastics can thus be mutually separated from each other. The liquids used in the separation container can be selected depending on the types of plastic.

Figure 4 illustrates that the step 300 of sorting of the plastic pieces based on colour comprises of subdividing the plastic pieces into groups according to a colour 310, 320, 330, 340, 350. The groups comprise plastic pieces of substantially the same colour. The group 310 for instance corresponds to the colour red, the group 320 corresponds to the colour green and the group 330 for instance corresponds to the colour blue. It will be apparent to the skilled person that the plastic pieces can also be sorted according to many other colours, for instance purple, orange, yellow and so on, and that the number of groups illustrated in figure 4 is not limitative to the sorting. It will be apparent to the skilled person that the groups are separated from each other after the sorting.

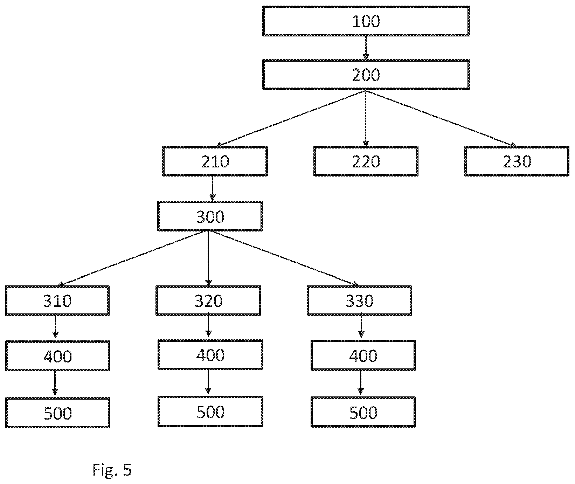

Figure 5 illustrates a preferred embodiment of the method according to the invention. Figure 5 particularly illustrates that the groups of plastic pieces, which were sorted according to type 210, 220, 230 or colour 310, 320, 330, can go through the further subsequent steps as groups. The method can thus for instance first sort the plastic pieces by type of plastic 210, 220, 230, and then further sort the type 210, which for instance corresponds with thermosets, by a colour 310, 320, 330, 340, 350. As shown in figure 1, the plastic first goes through the step 100 of grinding of the plastic into plastic pieces 600. The plastic pieces are then preferably sorted by type of plastic into groups 210, 220, 230 which comprise substantially the same type of plastic. In a preferred embodiment the group 210 which corresponds with plastic parts of the thermosets type is then sorted by colour in the step 300. The plastic pieces are thus sorted into groups comprising plastic pieces with substantially the same colour. The group 210 can for instance be sorted according to three colours: red 310, blue 320, green 330. Each group will then be shredded in step 400 into plastic flakes and be processed in step 500 into a recycled good. It will be apparent that the alternative embodiments illustrated in figure 2 can also be applied in the method of figure 5.

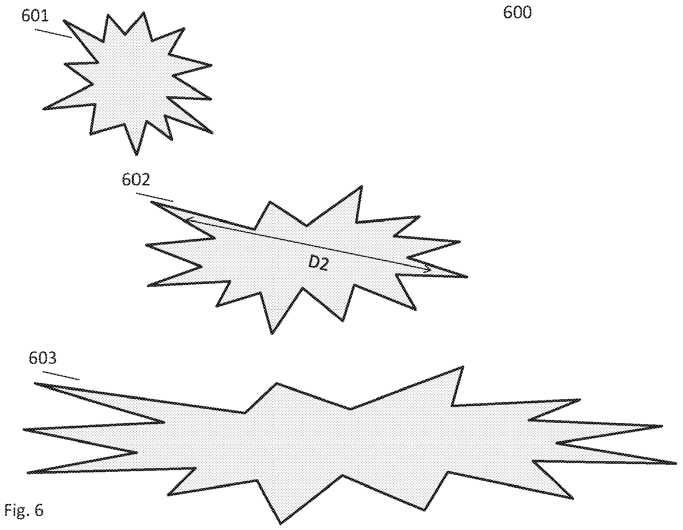

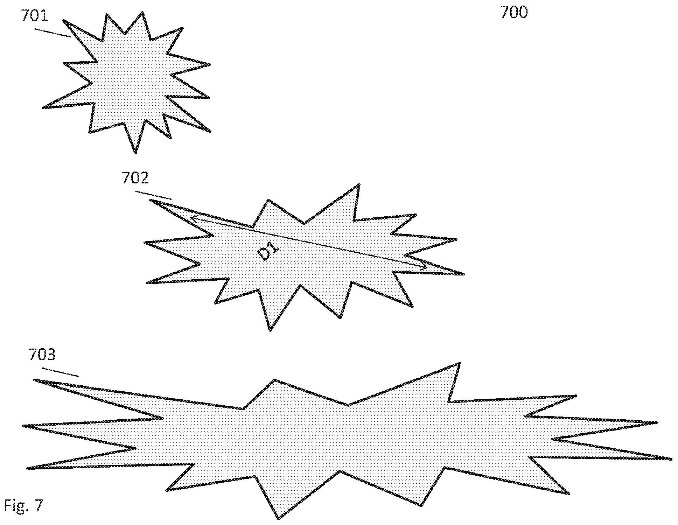

Figures 6 and 7 show plastic pieces 601, 602, 603 or plastic pieces 701, 702, 703. The plastic pieces are obtained after the step 100 of grinding. The step 100 is particularly performed by a grinding device, wherein the plastic is ground into plastic pieces 600 with a desired minimum size. The minimum size of plastic pieces 600 corresponds to a maximum section D2 of the plastic pieces 600, such that this section can be inscribed in a circle with a diameter which is preferably greater than 50 mm, preferably greater than 75 mm, more preferably greater than 100 mm. It will be apparent that the plastic parts have different shapes.

Figure 7 is similar to figure 6 and shows that, after the step 400 of shredding, the plastic flakes 701, 702, 703, similar to the plastic pieces, have a maximum size corresponding with a maximum section D1 of the plastic flakes, such that this section is preferably smaller than 20 mm, more preferably smaller than 12 mm, still more preferably smaller than 10 mm, most preferably smaller than 8 mm. The step 450 of verifying, which is illustrated in figure 2, can be performed in both cases.

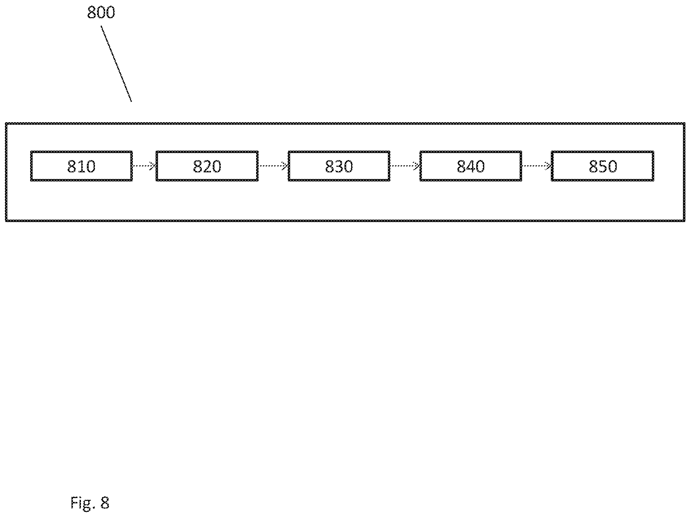

Figure 8 shows a recycling system 800 for recycling plastic, preferably recycling plastic toys, comprising a grinding device 810 which is configured to grind the plastic into plastic pieces, a first sorting device 820 configured to sort the plastic pieces based on type of plastic, a further sorting device 830 configured to sort the plastic pieces based on colour, a shredding device 840 configured to shred the sorted plastic pieces, after sorting of the plastic pieces, into plastic flakes, and a processing device 850 configured to process the plastic flakes into a recycled good by means of rotational moulding, wherein a micronized plastic is added during the rotational moulding.

The skilled person will appreciate based on the above description that the invention can be embodied in different ways and based on different principles. The invention is not limited to the above described embodiments. The above described embodiments and the figures are purely illustrative and serve only to increase understanding of the invention. The invention will not therefore be limited to the embodiments described herein, but is defined in the claims.

## Claims

1. Method for recycling plastic, preferably recycling plastic toys, wherein the method comprises the steps of:
- grinding (100) the plastic into plastic pieces (600);
- washing the plastic pieces after grinding the plastic into plastic pieces;
- sorting (200) the plastic pieces based on type of plastic;
- sorting (300) the plastic pieces based on colour;
- after sorting of the plastic pieces, shredding (400) the sorted plastic pieces into plastic flakes (700);
- processing (500) the plastic flakes (700) into a recycled good by means of rotational moulding, wherein, during the rotational moulding, a micronized plastic is added.

2. Method according to claim 1, wherein the sorting (300) of the plastic pieces based on colour comprises of subdividing the plastic pieces into groups (310, 320, 330, 340) according to a colour, wherein each group comprises plastic pieces having substantially the same colour as each other.

3. Method according to the foregoing claim, wherein the colour of the plastic pieces is determined by means of spectral imaging.

4. Method according to the foregoing claim, wherein the spectral imaging comprises multispectral and/or hyperspectral imaging.

5. Method according to any one of the claims 3-4, wherein the spectral imaging is near-infrared, NIR, spectroscopy.

6. Method according to any one of the foregoing claims, wherein the dimensions of the plastic flakes are such that a maximum section D₁ thereof is smaller than 20 mm, more preferably smaller than 12 mm, still more preferably smaller than 10 mm, most preferably smaller than 8 mm.

7. Method according to any one of the foregoing claims, wherein the step of shredding comprises a plurality of shredding steps.

8. Method according to any one of the foregoing claims, wherein the micronized plastic is a thermoplastic powder, preferably a recycled thermoplastic powder.

9. Method according to any one of the foregoing claims, wherein the dimensions of the plastic pieces are such that a maximum section D₂ thereof is greater than 50 mm, preferably greater than 75 mm, more preferably greater than 100 mm.

## Patentansprüche

1. Verfahren zum Recycling von Kunststoff, vorzugsweise Recycling von Kunststoffspielzeug, wobei das Verfahren die Schritte umfasst:
- Zermahlen (100) des Kunststoffs in Kunststoffstücke (600);
- Waschen der Kunststoffstücke nach dem Zermahlen des Kunststoffs in Kunststoffstücke;
- Sortieren (200) der Kunststoffstücke basierend auf einer Kunststoffart;
- Sortieren (300) der Kunststoffstücke basierend auf einer Farbe;
- nach dem Sortieren der Kunststoffstücke, Zerkleinern (400) der sortierten Kunststoffstücke zu Kunststoffflocken (700);
- Verarbeiten (500) der Kunststoffflocken (700) zu einem recycelten Gut mittels Rotationsformen, wobei, während dem Rotationsformen, ein mikronisierter Kunststoff zugegeben wird.

2. Verfahren nach Anspruch 1, wobei das Sortieren (300) der Kunststoffstücke basierend auf der Farbe ein Unterteilen der Kunststoffstücke in Gruppen (310, 320, 330, 340) entsprechend einer Farbe umfasst, wobei jede Gruppe Kunststoffstücke umfasst, die im Wesentlichen die gleiche Farbe aufweisen.

3. Verfahren nach dem vorstehenden Anspruch, wobei die Farbe der Kunststoffstücke mittels spektraler Bildgebung bestimmt wird.

4. Verfahren nach dem vorstehenden Anspruch, wobei die spektrale Bildgebung eine multispektrale und/oder hyperspektrale Bildgebung umfasst.

5. Verfahren nach einem der Ansprüche 3 bis 4, wobei die spektrale Bildgebung eine Nahinfrarot-Spektroskopie, NIR-Spektroskopie, ist.

6. Verfahren nach einem der vorstehenden Ansprüche, wobei die Abmessungen der Kunststoffflocken derart sind, dass ein maximaler Abschnitt D₁ davon kleiner als 20 mm, mehr bevorzugt kleiner als 12 mm, noch mehr bevorzugt kleiner als 10 mm, am meisten bevorzugt kleiner als 8 mm ist.

7. Verfahren nach einem der vorstehenden Ansprüche, wobei der Schritt des Zerkleinerns eine Vielzahl von Zerkleinerungsschritten umfasst.

8. Verfahren nach einem der vorstehenden Ansprüche, wobei der mikronisierte Kunststoff ein thermoplastisches Pulver, vorzugsweise ein recyceltes thermoplastisches Pulver ist.

9. Verfahren nach einem der vorstehenden Ansprüche, wobei die Abmessungen der Kunststoffstücke derart sind, dass ein maximaler Abschnitt D₂ davon größer als 50 mm, vorzugsweise größer als 75 mm, mehr bevorzugt größer als 100 mm ist.

## Revendications

1. Procédé de recyclage du plastique, de préférence des jouets en plastique, dans lequel le procédé comprend les étapes suivantes :
- broyage (100) du plastique en morceaux de plastique (600) ;
- lavage des morceaux de plastique après avoir broyé le plastique en morceaux de plastique ;
- tri (200) des pièces en plastique en fonction du type de plastique ;
- tri (300) des pièces en plastique en fonction de leur couleur ;
- après le tri des morceaux de plastique, déchiquetage (400) des morceaux de plastique triés en flocons de plastique (700) ;
- transformation (500) des flocons de plastique (700) en un produit recyclé au moyen d'un moulage par rotation, dans lequel un plastique micronisé est ajouté pendant le moulage par rotation.

2. Procédé selon la revendication 1, dans lequel le tri (300) des pièces en plastique en fonction de leur couleur consiste à subdiviser les pièces en plastique en groupes (310, 320, 330, 340) en fonction d'une couleur, dans lequel chaque groupe comprend des pièces en plastique ayant sensiblement la même couleur les unes par rapport aux autres.

3. Procédé selon la revendication précédente, dans lequel la couleur des pièces en plastique est déterminée au moyen d'une imagerie spectrale.

4. Procédé selon la revendication précédente, dans lequel l'imagerie spectrale comprend l'imagerie multispectrale et/ou hyperspectrale.

5. Procédé selon l'une quelconque des revendications 3 à 4, dans laquelle l'imagerie spectrale est une spectroscopie dans le proche infrarouge, NIR.

6. Procédé selon l'une quelconque des revendications précédentes, dans lequel les dimensions des flocons de plastique sont telles qu'une section maximale D₁ de ceux-ci est inférieure à 20 mm, de préférence inférieure à 12 mm, de préférence encore inférieure à 10 mm, de préférence encore inférieure à 8 mm.

7. Procédé selon l'une quelconque des revendications précédentes, dans lequel l'étape de déchiquetage comprend une pluralité d'étapes de déchiquetage :

8. Procédé selon l'une quelconque des revendications précédentes, dans lequel le plastique micronisé est une poudre thermoplastique, de préférence une poudre thermoplastique recyclée.

9. Procédé selon l'une quelconque des revendications précédentes, dans lequel les dimensions des pièces en plastique sont telles qu'une section maximale D₂ de celles-ci est supérieure à 50 mm, de préférence supérieure à 75 mm, plus préférentiellement supérieure à 100 mm.
